# EUROPEAN PATENT SPECIFICATION

(11) **EP 2 936 603 B1**
(45) Date of publication and mention of the grant of the patent: **08.11.2017**
(21) Application number: 13819056.6
(22) Date of filing: 17.12.2013
(51) Int. Cl.: H01M 8/2475, H01M 8/248

(54) **FUEL CELL STACK ASSEMBLY AND METHOD OF ASSEMBLY**
BRENNSTOFFZELLENSTAPELANORDNUNG UND MONTAGEVERFAHREN
ASSEMBLAGE D'EMPILEMENT DE PILES À COMBUSTIBLE ET PROCÉDÉ D'ASSEMBLAGE

(30) Priority: 21.12.2012 GB 201223282
(43) Date of publication of application: 28.10.2015
(73) Proprietor: Intelligent Energy Limited, Leicestershire LE11 3GB (GB)
(72) Inventor: HORLOCK, Mark, Phillip, Loughborough LE11 3GB (GB); KELLY, Andrew, Paul, Loughborough LE11 3GB (GB); PAYNE, Simon, Loughborough LE11 3GB (GB)
(74) Representative: Ahmad, Sheikh Shakeel
(86) International application number: PCT/GB2013/053322
(87) International publication number: WO 2014/096804

(56) References cited:
- WO-A1-2008/028440
- DE-A1-102008 040 251
- US-B1- 6 218 039

## Description

The present disclosure relates to fuel cell stack assemblies, and methods of assembling fuel cell stack assemblies.

Conventional electrochemical fuel cells convert fuel and oxidant, generally both in the form of gaseous streams, into electrical energy and a reaction product. A common type of electrochemical fuel cell for reacting hydrogen and oxygen comprises a polymeric ion (proton) transfer membrane, with fuel and air being passed over respective sides of the membrane. Protons (that is, hydrogen ions) are conducted through the membrane, balanced by electrons conducted through a circuit connecting the anode and cathode of the fuel cell. To increase the available voltage, a stack may be formed comprising a number of such membranes arranged with separate anode and cathode fluid flow paths. Such a stack is typically in the form of a block comprising numerous individual fuel cell plates held together by end plates at either end of the stack.

US 6218039B1 discloses a fuel cell assembly including a stack assembly having fuel cell plates and a frame having a bottom section and at least two side sections integrally formed with the bottom section. WO 2008/028440A1 discloses a housing for accommodating at least one fuel cell stack, comprising a first housing shell and a second housing shell.

In accordance with a first aspect of the invention there is provided a fuel cell stack assembly according to claim 1 comprising:
a first encapsulation member comprising a first end plate and two side walls extending transversely from the first end plate;
a second encapsulation member comprising a second end plate;
one or more fuel cells located between the first end plate and second end plate; and
two locking members that are configured to engage with a respective side wall of the first encapsulation member and the second encapsulation member, in order to retain the first end plate and the second end plate in a fixed relative position,
wherein the side walls of the first encapsulation member are each configured to:
   engage with the second encapsulation member in order to provide a compression force to the one or more fuel cells, and
   receive the respective locking member in a direction that is parallel to the plane of the one or more fuel cells.

The locking members each comprise a plurality of engaging regions. The plurality of engaging regions may be configured to space apart the respective end plates of the first encapsulation member and the second encapsulation member by different amounts. This can allow the one or more fuel cells to be assembled to a desired load, as opposed to a desired dimension.

The engaging regions may comprise regions of the locking member with different thicknesses. The locking member may comprise a stepped profile. The engaging regions may comprise different steps in the stepped profile.

The side walls of the first encapsulation member may be configured to exert a first force on the respective locking members in an opposite direction to a second force exerted on the respective locking members by the second encapsulation member.

The direction of the first and second forces may be transverse/orthogonal to the plane of the one or more fuel cells.

The first force may be exerted on each locking member at a first position on the locking member, which may be different to a second position at which the second force is exerted. The first position may be spaced apart from the second position in a direction that is parallel to the plane of the one or more fuel cells. Therefore, a shear force can be said to be exerted on the locking member.

The locking members may each comprise an engagement portion and a handling portion. The engagement portion may be transverse to the handling portion.

The side walls of the first encapsulation member may be configured to receive the locking member in a direction that is orthogonal to the plane of the side walls.

The locking members may each comprise one or more pins that are configured to engage with one or more openings in the respective side wall of the first encapsulation member and the second encapsulation member.

The locking members may each comprise a C-clip.

The side walls of the first encapsulation member are configured to receive the locking member in a direction that is parallel to the plane of the side walls. The locking members may each comprise a pin that is configured to engage with retaining members associated with the respective side wall of the first encapsulation member and the second encapsulation member.

The second encapsulation member may comprise two side walls extending transversely from the second end plate. The two locking members may be configured to engage with a respective side wall of the second encapsulation member. One or both of the side walls of the second encapsulation member may be within, outside, or co-planar with the side walls of the first encapsulation member. The side walls of the first encapsulation member may be parallel to the side walls of the second encapsulation member.

The first end plate and the second end plate may each define a compression surface adjacent to and in compressive relationship with the one or more fuel cells. The first end plate and/or the second end plate may comprise a preformed element defining the compression surface. The preformed element may be configured with a predetermined curvature such that the compression surface is a convex surface when the preformed element is not under load whereas, under the application of the load to maintain the fuel cells under compression, flexure of the preformed element may cause the compression surface to become a substantially planar surface.

The first end plate and/or the second end plate may comprise a port for communicating fluid (which may be liquid or gas) to or from the one or more fuel cells.

The fuel cell stack assembly may further comprise a housing that is internally shaped for providing an assembly guide for at least one of: the first encapsulation member; the second encapsulation member; and the one or more fuel cells.

The housing may comprise two apertures for receiving the respective locking members. According to a further aspect of the invention, there is provided a method of assembling a fuel cell stack assembly according to claim 15, the fuel cell stack assembly comprising:
a first encapsulation member comprising a first end plate and two side walls extending transversely from the first end plate;
a second encapsulation member comprising a second end plate;
one or more fuel cells; and
two locking members, each comprising a plurality of engaging regions, wherein the plurality of engaging regions are configured to space apart the respective end plates of the first encapsulation member and the second encapsulation member by different amounts to maintain a predetermined working load on the one or more fuel cells, the method comprising:
   locating the one or more fuel cells between the first end plate and the second end plate;
   applying an external load to bias the first end plate of the first encapsulation member and the second end plate of the second encapsulation member towards one another thereby compressing the one or more fuel cells;
   engaging the two locking members with a respective side wall of the first encapsulation member and the second encapsulation member in a direction that is parallel to the plane of the one or more fuel cells; and
   releasing the external load, thereby providing a fuel cell stack assembly that exerts a compression force on the one or more fuel cells and retaining the first end plate and the second end plate in a fixed relative position.

A description is now given, by way of example only, with reference to the accompanying drawings, in which:
figure 1a shows a fuel cell assembly with a second encapsulation member positioned over, and ready to be engaged with, a first encapsulation member;
figure 1b shows the fuel cell assembly of figure 1 a with the second encapsulation member having been moved downwards by an external force;
figure 1c shows the fuel cell assembly of figure 1b with the second encapsulation member having been moved further downwards by an external force;
figure 1d shows the fuel cell assembly of figure 1c with locking members engaged with the first and second encapsulation members;
figure 1e shows another view of the fuel cell assembly of figure 1 d;
figure 1f shows an end view of the side wall of the first encapsulation member of the fuel cell assembly of figure 1 a;
figure 2 shows a locking member with a variable thickness along its length;
figure 3 shows an exploded view of a fuel cell assembly similar to that illustrated in figure 1 d;
figure 4a shows tooling for assembling a fuel cell stack;
figure 4b shows an alternative carrier for holding a locking member;
figure 5a shows a fuel cell assembly in a substantially uncompressed condition;
figure 5b shows the fuel cell assembly of figure 5a under compression;
figure 5c shows the fuel cell assembly of figure 5b under a 2000 N external load;
figure 5d shows the fuel cell assembly of figure 5c after the external load has been removed;
figure 6a shows an exploded perspective view of an alternative fuel cell stack assembly in which a second encapsulation member has side walls;
figure 6b shows a perspective view of the fuel cell stack assembly of figure 6a when assembled;
figure 7a shows an exploded perspective view of an alternative fuel cell stack assembly in which retaining members are provided;
figure 7b shows a perspective view of the fuel cell stack assembly of figure 7a when assembled;
figure 7c shows an alternative locking member for use with the fuel cell stack assembly of figures 7a and 7b;
figure 8a shows a cross section of another fuel cell stack assembly with a locking member with coaxial engagement and handling portions;
figure 8b shows a cross section of another fuel cell stack assembly with a locking member with a plurality of engagement portions;
figure 9 a shows a locking member with a plurality of engagement portions;
figure 9b shows a side view of a fuel cell stack assembly for receiving the locking member of figure 9a;
figure 10 shows a cross section of another fuel cell stack assembly with a different side wall configuration;
figure 11 shows a cross section of yet another fuel cell stack assembly with a different side wall configuration; and
figure 12 illustrates a method of assembling a fuel cell stack assembly.

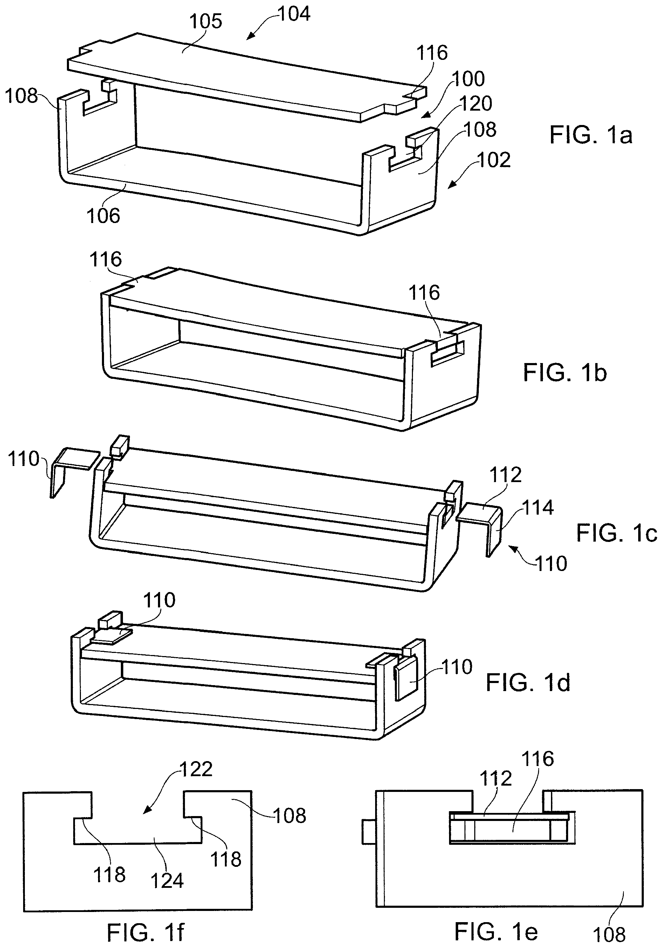

Figures 1 a to 1e illustrate various views of a fuel cell stack assembly 100 comprising a first encapsulation member 102 and a second encapsulation member 104 that are configured to engage with each other in order to apply a compression force to one or more fuel cells (not shown in figure 1) located between the two encapsulation members 102, 104.

The first encapsulation member 102 comprises a first end plate 106 and two side walls 108 that extend transversely from, and at opposing ends of, the first end plate 106. The second encapsulation member 104 comprises a second end plate 105.

In some examples, the first end plate 106 and/or the second end plate 105 may have one or more ports through which a fluid can be communicated to or from the fuel cells. Such a fluid may be fuel, air or coolant, for example.

As shown in figures 1c, 1d and 1e, the fuel cell assembly 100 also comprises two locking members 110. Each locking member 110 engages one of the side walls 108 of the first encapsulation member 102 and the second encapsulation member 104 in order to compress the one or more fuel cells.

Each locking member 110 engages one of the side walls 108 and the second encapsulation member 104 in a direction that is parallel to the plane of the fuel cells, as will be described in more detail below. In this example, the locking members 110 engage in directions that are orthogonal to the plane of the side walls 108.

Figure 1 a shows the fuel cell assembly 100 with the second encapsulation member 104 positioned over, and ready to be engaged with, the first encapsulation member 102. The second encapsulation member 104 has a tab 116 extending from each of two opposing end faces.

The side walls 108 of the first encapsulation member 102 each have an opening 120 at their distal ends (the ends furthest from the first end pate 106) for receiving the tabs 116 of the second encapsulation member 104.

Figure 1f shows an end view of the side wall 108. The opening 120 has a mouth region 122, which is nearest the distal end of the side walls 108. The mouth region 122 opens up into a cavity region 124, which is closer to the first end plate 106 than the mouth region 122. The width of the cavity region 124 is greater than the width of the mouth region 122. That is, the dimension of the opening 120 in a direction parallel to the plane of the first end plate 106 and orthogonal to the plane of the side wall 108 is greater in a region of the opening 120 that is closer to the first end plate 106.

In this example, two shoulders 118 in the side walls 108 are provided at the transition between the mouth region 122 and the cavity region 124 of the opening 120 as will be described in further detail with reference to figure 1 e.

Figure 1b shows the fuel cell assembly 100 with the second encapsulation member 104 having been moved downwards by an external force, such that the second encapsulation member 104 has moved towards the first encapsulation member 102 from the position shown in figure 1 a. As shown in figure 1b, the tabs 116 of the second end plate 105 are located in the mouth region of the openings 120 in the side walls 108. The width of the mouth region may be only slightly larger than the width of the tabs, for example a clearance of only a few millimetres may be provided.

Figure 1c shows the fuel cell assembly 100 with the second encapsulation member 104 having been moved further downwards by an external force, such that the second encapsulation member 104 has moved towards the first encapsulation member 102 from the position shown in figure 1 b. As shown in figure 1 , the tabs 116 of the second end plate 105 are located in the cavity region of the openings 120 in the side walls 108. The tabs 116 have been moved past the shoulders 118 in the opening 120.

The locking members 110 are shown in figure 1c in a position ready for engaging with the first and second encapsulation members 102, 104. The locking members 110 have an engagement portion 112 and a handling portion 114, which extend transversely to one another, in this example they are orthogonal to one another. The engagement portions 112 of the locking members 110 are to be inserted into the cavity region of the opening 120. The width of the cavity region generally corresponds with the width of the locking member 110. The width of the locking member 110 is greater than the width of the tab 116 of the second end plate 105.

Figures 1d and 1e show the locking members 110 engaged with the side walls 108 of the first encapsulation member 120 and the second encapsulation member 104. More precisely, the engagement portion 112 of each locking member 110 is located in between the top surface of the tab 116 and the bottom surface of the shoulder 118 in the side wall 108.

The external force that was used to locate the tabs 116 of the second encapsulation member 104 in the cavity regions of the openings 120 in the side walls 108 has been removed as the locking members 110 now hold the first and second encapsulation members in position relative to each other, thereby maintaining the compression force on the fuel cells.

It will be appreciated that fuel cells are held under compression in a stack so that various gaskets and seals can function correctly. Therefore, when the fuel cells are stationary and held between the first end plate 106 and second end plate 105 under a compressive force, they provide a force pushing outwards on the two end plates 105, 106. This force causes the top surface of the tab 116 to apply a force to the engagement portion 112 of the locking member 110 in a first direction that is transverse to the plane of the second end plate 105. The force provided to the engagement portion 112 by the tab 116 is d encapsulation membertowards the centre of the engagement portion 112 where the components abut.

The engagement portion 112 is rigid such that it, in turn, applies a force to the regions of the side wall 108 that define the shoulders 118 in the opening 120. This force is in the same direction as the force provided to the engagement portion 112 by the tab 116, but is applied at a position that is outside the location at which the force is provided by the tab 116 to the engagement portion 112. This is because the shoulders 118 are outside of the footprint of the tab 116. The shoulders 118 contact the locking member 110 at a first position, which is different to the position at which the tab 116 contacts the locking member 110. The first position is spaced apart from the second position in a direction that is parallel to the plane of the one or more fuel cells.

The shoulders 118 are sufficiently rigid such that they do not significantly move under the force applied by the fuel cell plates resisting compression; that is, all of the forces between the various components of the fuel cell assembly 100 are balanced. Therefore, when considering the locking member 110 as it is shown in figure 1e, the tab 116 exerts a second force on a central region of the locking member 110 in an upward direction, and the shoulders 118 of the side wall 108 exert a first force on outer regions of the locking member 110 in a downward direction. The central region is an example of a second position. The outer regions are examples of first regions. In a width direction, the outer regions are outside the central region such that a shear force is applied to the locking member 110 by the forces exerted by the tab 116 and shoulders 118 in opposite directions.

Providing a fuel cell assembly that relies on the shear strength of the locking member 110 can be advantageous because the shear force is orthogonal to an expansion force of the compressed fuel cell assembly, allowing one or more of:
- a small area of contact to hold the assembly in place;
- the expansion force to act to hold the locking mechanism in place and not loosen over time; and
- reduced variability in implementation of the fuel cell assembly compared with assemblies that use a spring clip, as the shear locking member itself does not exert any force; just maintains that force that is exerted on it.

The construction of such a fuel cell assembly is therefore a simplified as the end plates may be simply slid into place. Also, the overall addition to the size of the assembly is small.

Furthermore, when in place the locking member 110 may experience little or no force in a direction that is parallel to the planes of the fuel cells, which can be advantageous as no mechanism for restricting movement of the locking member 110 in a lateral direction may be required.

In this example, both of the first and second end plates 106, 105 comprise a preformed element configured with a predetermined curvature such that a surface of the end plate that contacts the fuel cells, which will be referred to as a compression surface, is a convex surface when the preformed element is not under load. This is shown in figures 1a and 1b.

When the locking member 110 is engaged with the encapsulation members 102, 104 to apply a load to maintain the fuel cells under compression, flexure of the preformed element between the two ends that are fixed in position relative to the side walls 108 causes the compression surface to become a substantially planar surface. This is shown in figures 1c and 1d.

In embodiments that use such preformed elements, each end plate 102, 104 is fabricated of a sufficiently stiff, but elastic material such that at the desired compressive loading of the fuel cell plates during assembly brings each unloaded convex compression face into a substantially planar disposition. The application of the locking member 110 results in flexure of each of the end plates 102, 104 such that the compression faces become both planar, and relatively parallel to one another, thereby imparting correct uniform pressure on both end faces of the fuel cell stack. The thickness, stiffness and elastic deformability out-of-plane for each of the preformed end plates 102, 104 is chosen to ensure that planar and uniform pressure is imparted to the fuel cells.

In summary, the expression "preformed" end plates is intended to indicate that the end plates exhibit a predetermined curvature under no load such that they will assume a flat and parallel relationship to one another at the required fuel cell stack assembly compaction pressure. The predetermined curvature under no load may be chosen such that it allows for an initial break-in and settling of the stack assembly during assembly and commissioning. In a fuel cell stack assembly, there may be a short period before or during commissioning in which the stack compresses slightly, for example as a result of plastic deformation of layers such as the diffusion layer or various gaskets. The predetermined curvature of the end plates under no load may be configured to accommodate this such that they assume a flat and parallel relationship to one another after commissioning of the fuel cell stack.

Use of one or more such preformed end plates 102, 104 can enable a fuel cell assembly to be constructed to a desired load instead of a set height. As applications for smaller fuel cell stacks become increasingly important, materials with a thinner gauge become particularly advantageous. However, if a fuel cell assembly is built to a set height, an overload may need to be applied to ensure that a sufficient compression force is applied to the fuel cells for all variations of the fuel cell dimensions that are within the tolerances of construction. Such overloading can cause buckling of thin components thereby compromising performance of the fuel cell stack. Therefore, fuel cell assemblies disclosed herein that can be built to a predetermined load instead of a predetermined height can reduce these problems.

It will be appreciated that in other examples the first encapsulation member comprises side walls along more than two edges, or in some cases all edges, of the first end plate. In such examples, corresponding tabs may be provided on the second encapsulation member. Each tab is therefore associated with an opening of a wall that can be engaged with a locking member.

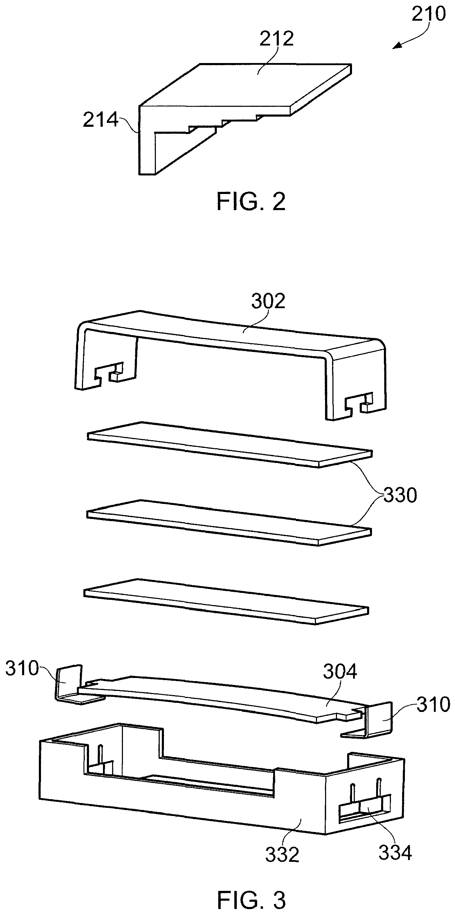

Figure 2 illustrates a locking member 210 according to the invention, that can be used with the fuel cell assembly of figures 1a to 1f. The locking member 210 comprises an engagement portion 212 for engaging with two encapsulation members and an optional handling portion 214. The handling portion can assist with inserting and removing the locking member 210.

The engagement portion 212 in this example has a profile that has engaging regions of different thicknesses such that it can be used to build a fuel cell assembly to a desired load instead of to a fixed dimension. The different engaging regions are used to space apart the respective end plates of the first encapsulation member and the second encapsulation member by different amounts. In the same way as described above with reference to figures 1 a to 1e, the fuel cells and encapsulation members can be compressed to a desired working load by an external force. The locking member 210 can then be inserted between the tab on a second end plate and the shoulders of side walls associated with a first end plate until the part of the engagement portion 212 of the locking member that will be provide the required load is properly located.

In this example, the engagement portion 212 of the locking member 210 has a stepped profile, with each step representing a different engaging region and having a contact surface for abutting a second encapsulation member that is generally parallel to the first end plate. The thickness of each step is a function of distance along the engagement portion 212, with a decreasing thickness as distance from the handling portion 214 increases. Such an example is advantageous as there is little or no component of any force applied to the locking member 210 by an encapsulation member that is in a direction that is parallel to the end plates. Therefore, no mechanism for restricting movement of the locking member 210 in a lateral dimension (that is parallel to the end plates) may be required.

In other embodiments, the locking member may have any profile that has at least two regions with a different thickness, including a bevelled profile.

The ability of the locking member 210 to build a fuel cell assembly to load instead of to a fixed height can be used instead of, or as well as, the preformed elements that are described above.

Figure 3 illustrates an exploded view of a fuel cell assembly 300 that is similar to the one shown in figure 1. Components that have already been described with reference to figure 1 will not necessarily be described again here. It will be appreciated that the locking member of figure 2 is shown upside down when compared with the orientation of locking members 310 that can be used with the fuel cell assembly 300 of figure 3.

The fuel cell assembly 300 includes a first encapsulation member 302, a second encapsulation member 304 and three fuel cells 330 located between the two encapsulation members 302, 304. As discussed above, the fuel cells 330 are compressed between the two encapsulation members 302, 304, which are held together by locking members 310. The fuel cell assembly 300 also includes a housing 332, which can be internally shaped for providing an assembly guide for at least some of the components of the fuel cell assembly 300.

In one example, at least each of the following components can be placed into the housing 332 in turn in order to assemble the fuel cell assembly 300:
- the second encapsulation member 304;
- the three fuel cells 330; and
- the first encapsulation member 302.

The housing 332 can have one or more known guide mechanisms or members that engage with an edge or face of one or more of the above components to locate them in a desired position. For example, guide rails may be provided. The guide mechanisms or members may also be orientation specific such that components cannot be inserted into the housing 332 in an incorrect orientation, such as upside down.

After the two encapsulation members 302, 304 and fuel cells 330 have been inserted into the housing 332, they are compressed to a working dimension or to a working load such that gaskets and seals associated with the fuel cells 330 can function correctly.

The housing 332 has two apertures 334 in its side walls that correspond to at least part of the openings in the side walls of the first encapsulation member 302. When the two encapsulation members 302, 304 and fuel cells 330 have been adequately compressed, the locking members 310 are inserted through the apertures 334 so that they enter the openings in the first encapsulation member 302 thereby holding the two encapsulation members 302, 304 together as discussed above in relation to figures 1a to 1e. In this example, the locking members 310 also engage with the housing 332 and maintain it in a fixed position relative to the two encapsulation members.

The housing 332 may have friction contact to the side walls of the first encapsulation member 302, which can help to centralise and retain the fuel cells 330 in a partially compressed position. This can make this stage of the assembly easy and robust to handle without parts moving or falling out.

Use of the housing 332 of figure 3 can increase the speed of assembly of the fuel cell stack assembly.

The housing 332 may be made from a plastic. The first and second encapsulation members 302, 304 may be made from stainless steel.

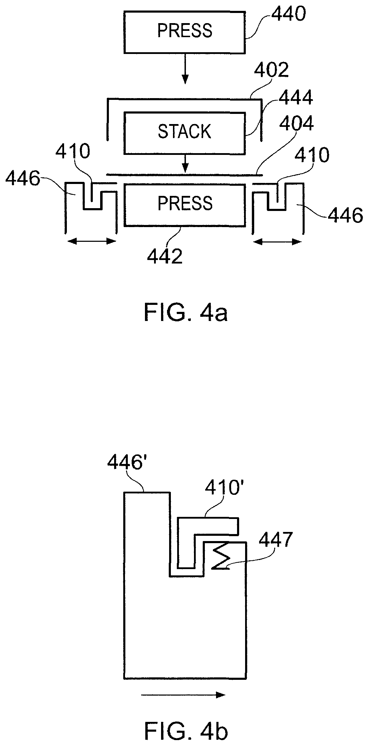

Figures 4a and 4b illustrate tooling for assembling a fuel cell assembly as disclosed herein. The tooling is shown engaging two locking members 410 that are similar to the locking members shown in figures 1a to 1e, although it will be appreciated that similar tooling can be used for other types of locking member.

The tooling comprises an upper press 440 and a lower press 442. The upper press 440 and lower press 442 are brought together so as to compress a fuel cell stack 444 between a first encapsulation member 402 and a second encapsulation member 404. The presses 440, 442 can be controlled such that a desired load is applied to the fuel cell stack 444 or such that the fuel cell stack 444 is compressed to a desired dimension.

The tooling also comprises two carriers 446 that are movable relative to the fuel cell assembly laterally in a direction that is parallel to the plane of the fuel cells in the fuel cell stack 444. Each of the carriers 446 holds a locking member 410 for engaging with the first and second encapsulation members 402, 404 such that they can maintain the compressive force on the fuel cell stack 444 when the presses 440, 442 are retracted.

In this example, due to the way in which the locking members 410 are held in the carriers 446, the carriers 446 also move in a direction that is orthogonal to the plane of the fuel cells in order to disengage from the locking members 410 such that the locking members 410 remain in position.

In some examples, the presses 440, 442 may be released from the fuel cell assembly before the carriers 446 are disengaged from the locking members 410. In this way, friction between the locking member 410 and the two encapsulation members 402, 404 can help to keep the locking members 410 in the desired location when the carriers 446 are removed.

Figure 4b shows further details of an alternative carrier 446' for holding a locking member 410'. In this example, the carrier comprises a spring 447 that biases the locking member 410' such that its engagement portion, which will engage with the two encapsulation members, is spaced apart from the carrier 446'. This can assist with correctly locating the locking member 410' in position in the fuel cell assembly.

Of course, any other resilient biasing means can be used instead of the spring 447.

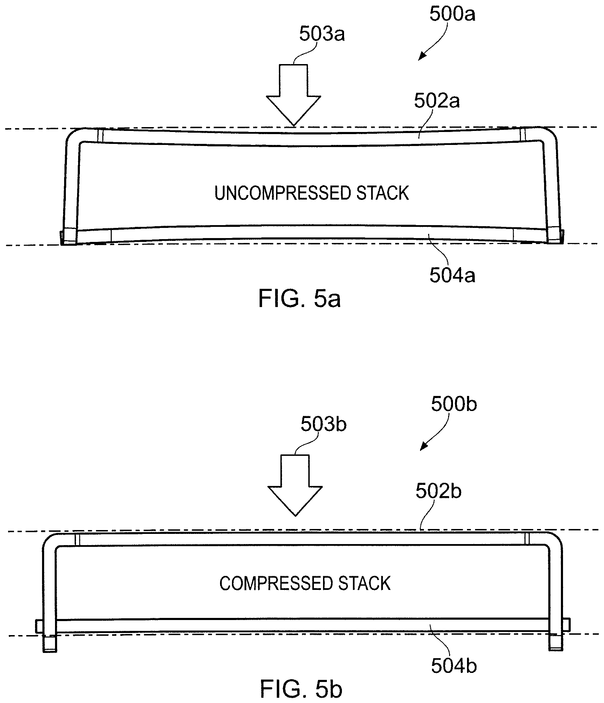

Figures 5a to 5d illustrate stages in an assembly process for a fuel cell assembly 500a-d that is similar to the fuel cell assembly described with reference to figures 1a - 1f. The fuel cell assembly 500a-d comprises a first encapsulation member 502a-d, a second encapsulation member 504a-d and one or more fuel cells (not shown). The first encapsulation member 502a-d comprises a first end plate. The second encapsulation member 502a-d comprises a second end plate. Both the first and second end plates are preformed with a predetermined curvature such that a compression surface of each plate is a convex surface when that plate is not under load.

Figure 5a illustrates the fuel cell assembly in a substantially uncompressed condition. An external force 503a has been applied to the first encapsulation member 502a in order to align it with, and bring it into contact with, the second encapsulation member 504a. The side walls of the first encapsulation members 502a do not extend beyond the end plate of the second encapsulation member 504a. In this condition, the first and second side plates present flexure, where the respective compression surfaces of the first and second side plates are convex.

Figure 5b illustrates the fuel cell assembly 500b under compression. The application of the external force 503b is sufficient to engage an opening of the first encapsulation member 502b with a tab of the second encapsulation member 504b, as discussed in detail with regard to figures 1a - 1f.

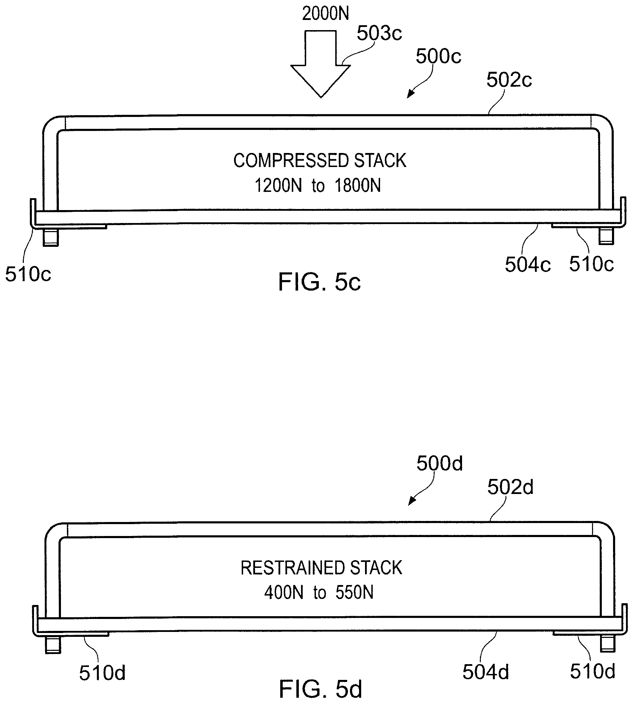

Figure 5c illustrates the fuel cell assembly 500c with the application of a 2000 N external force 503c in this example. The one or more fuel cells within the fuel cell assembly 500c may be loaded to 1200 - 1800 N, for example. Such a force is sufficient to ensure that the various seals and gaskets associated with the fuel cells are loaded to a suitable operating pressure so as to provide the necessary seals between different regions of the fuel cells. Any external force 503c that is provided above the load that can be accommodated by the fuel cells will be borne by the side walls of the first encapsulation member 502c.

When the fuel cell assembly is under a sufficient external load, locking members 510c may be engaged with the encapsulation members 502c, 504c in order to retain the first and second encapsulation members 502c, 504c in a relative fixed position. The locking members 510c are inserted through an opening in the side walls of the first encapsulation member 502c in a direction that is parallel to a plane of the fuel cells. The locking members effectively clip the second encapsulation member 504c in place with the first encapsulation member 502c.

Figure 5d illustrates a fully assembled fuel cell assembly 500d as described with respect to figure 5c in which the external force has been removed. In this state the fuel cells within the fuel cell assembly 500d are restrained. The expansive force of the various gaskets and seals of the fuel cells apply a 400 to 550 N force to the first and second encapsulation members 502d, 504d and the locking members 510d.

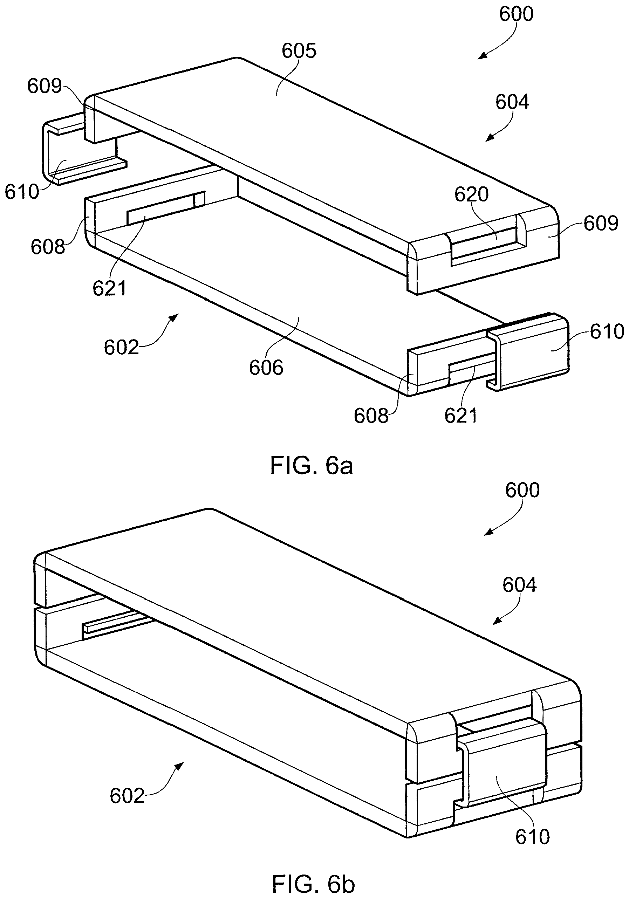

Figures 6a and 6b illustrate views of a fuel cell stack assembly 600 outside the scope of the invention, in which a second encapsulation member has side walls.

Figure 6a illustrates an exploded perspective view of the fuel cell stack assembly 600. The fuel cell stack assembly 600 comprises a first encapsulation member 602 and a second encapsulation member 604 that are configured to engage with each other in order to apply a compression force to one or more fuel cells (not shown in figure 6a) located between the two encapsulation members 602, 604.

The first encapsulation member 602 comprises a first end plate 606 and two side walls 608 that extend transversely from, and at opposing ends of, the first end plate 606. The second encapsulation member 604 comprises a second end plate 605 and two side walls 609 that extend transversely from, and at opposing ends of, the second end plate 605. The side walls 608 of the first encapsulation member 602 are parallel to the side walls 609 of the second encapsulation member 604.

Each side wall 608, 609 of the fuel cell stack assembly 600 comprises an opening 620, 621, which in this example is adjacent to its proximal end (that is the end that is adjacent to the associated end plate 602, 604).

The fuel cell assembly 600 also comprises locking members 610 which, in this example, are C-clip locking members. The locking members 610 are configured to engage the openings 620, 621 of the side walls 608, 609 of the first and second encapsulation members 604, 606 in a direction that is parallel to the plane of the fuel cells. The locking members 610 are configured to engage in a direction that is orthogonal to the plane of the side walls 608. Unlike the fuel cell assembly illustrated in figure 1, no mouth region is required in the openings 620, 621 in this example. In the fuel cell assembly shown in figure 6a, the opening 620, 621 of each side wall 608, 609 extends to the edge of that side wall 608, 609.

Figure 6b illustrates an assembled fuel cell stack assembly 600, which may be referred to as a letter box assembly because of its distinctive shape. In this example, the first encapsulation member 602 is in contact with the second encapsulation member 604 and locking members 610 are engaged with the first and second encapsulation members 602, 604. Similar techniques as described with regard to figures 1 and 4 can be used to assemble the assembly shown in figure 6b. It will be appreciated that once the fuel cell assembly is assembled, the mutual force of the fuel cells within the assembly on the first and second encapsulation members 602, 604 maintains the locking member in position.

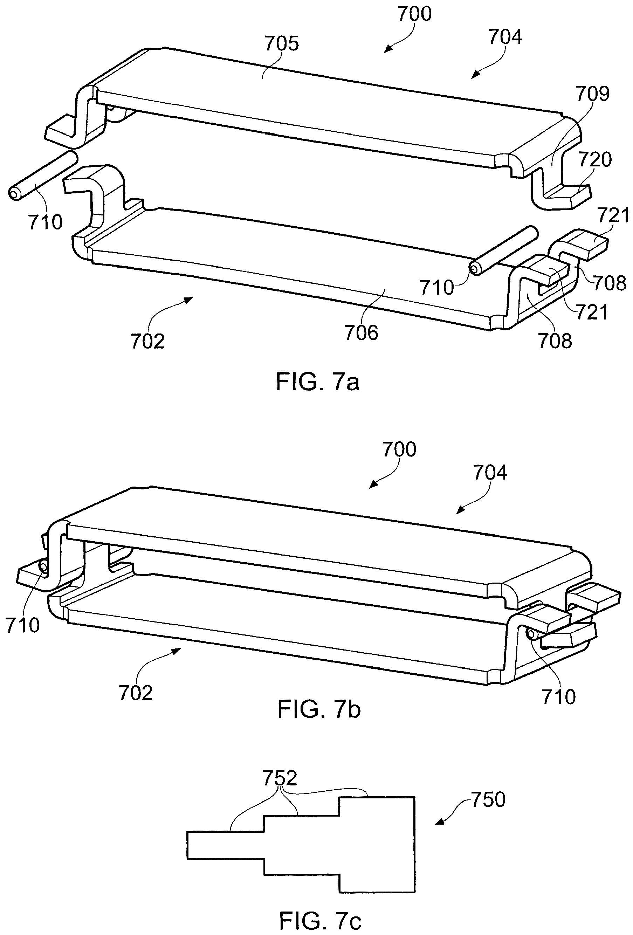

Figure 7a and 7b illustrate views of an alternative fuel cell stack assembly 700 having side walls which comprise retaining members. Figure 7a illustrates an exploded perspective view of the fuel cell stack assembly 700. Figure 7b shows the fuel cell stack assembly 700 when assembled.

Like the example described with regard to figure 6, the fuel cell stack assembly 700 comprises a first encapsulation member 702 and a second encapsulation member 704 that are configured to engage with each other in order to apply a compression force to one or more fuel cells (not shown in figure 7a) located between the two encapsulation members 702, 704.

The first and second encapsulation members 702, 704 may comprise a plurality of ports for communicating fluid to or from the one or more fuel cells.

The first encapsulation member 702 comprises a first end plate 706 and two side walls 708 that extend transversely to, and at opposing ends of, the first end plate 706. Also, as with the example described with regard to figure 6, the second encapsulation member 702 comprises a second end plate 705 and two side walls 709 that extend transversely to, and at opposing ends of, the second end plate 705.

Each side wall 708 of the first encapsulation member 702 of the fuel cell assembly 700 of figure 7 has a plurality of retaining members 721. The plurality of retaining members 721 of the respective side wall 708 are spaced apart from one another in a direction that is both parallel with the plane of the fuel cells and parallel with a plane of that side wall 708. The retaining members 721 extend outwardly at the distal end of the side wall 708. That is, the distal end of the side wall 708 extends away from the first encapsulation member 702 in a direction parallel with the plane of the fuel cells, thereby defining a hook.

Each side wall 709 of the second encapsulation member 704 has at least one retaining member 720. The at least one retaining member 720 is positioned in a direction that is both parallel with the plane of the fuel cells and parallel with the plane of the side wall 709. The at least one retaining member 720 is arranged to interleave with the plurality of retaining members 721 of the first encapsulation member 702. The at least one retaining member 720 extends outwardly at the distal end of the side wall 709, thereby also defining a hook.

The fuel cell assembly 700 also comprises locking members 710 which, in this example, are bars or pins. The locking members 710 are configured to engage the side walls 708, 709 of the first and second encapsulation members 704, 706 in a direction that is parallel to the plane of the fuel cells. The locking member 710 is configured to engage either in a direction that is orthogonal to the plane of the side walls 708, 709 or in a direction that is parallel to the plane of the side walls 708, 709.

Fuel cells may be located on build portions of the first encapsulation member 702 during assembly. The second encapsulation member 704 can then be positioned on the first encapsulation member 702 so that the retaining members, 720, 721 of the first and second encapsulation members 702, 704 interleave. An external force can be applied in order to sufficiently load the fuel cells within the fuel cell assembly 700, similar to the loading described with reference to figure 1. Once a sufficient load has been achieved, the locking member 710 is engaged with the retaining members, 720, 721 of the first and second encapsulation members 702, 704 so as to hold the fuel cell assembly 700 under compression.

The locking members 710 comprise a plurality of engaging regions that can space apart the respective end plates 706, 705 by different amounts. As discussed above, this can allow the one or more fuel cells to be assembled to a desired load, as opposed to a desired dimension.

An alternative locking member 750 is illustrated as figure 7c. The locking member 750 may comprise a stepped profile along its length, with each step 752 being at least as long as the sum of the:
i. the width of one of the retaining members 721 of the first encapsulation member 702;
ii. the width of the retaining member 720 of the second encapsulation member 704; and
iii. at least a part of the width of the other retaining member 721 of the first encapsulation member 702.

The value for iii. should be chosen so as to provide a sufficient retention to avoid the locking member 750 falling out of position in use.

Optionally, any surplus material of the locking member 750 that is not used to engage the first encapsulation member 702 or second encapsulation member 704 can be removed after assembly.

In other examples, the locking members 710 can be cam-shaped in cross-section, or have any other non-circular cross-sectional shape. That is, the locking members 710 may have a first diameter that is shorter than a second different diameter. In this way, the locking members 710 may be inserted in a first orientation such that the first diameter of the locking member 710 is vertically orientated in the example of figure 7. The first is less than the distance between the retaining members 720, 721 of the opposing encapsulation members 702, 704. The locking members 710 can then be rotated until the second diameter of the locking member 710 is vertically orientated. The second diameter corresponds to the distance between the retaining members 720, 721 of the opposing encapsulation members 702, 704. Such a locking member 710 represents another way in which a fuel cell assembly 700 can be conveniently built to a desired load.

The different diameters of such a locking member can be considered as a plurality of engaging regions, wherein the plurality of engaging regions are configured to space apart the respective end plates of the first encapsulation member and the second encapsulation member by different amounts.

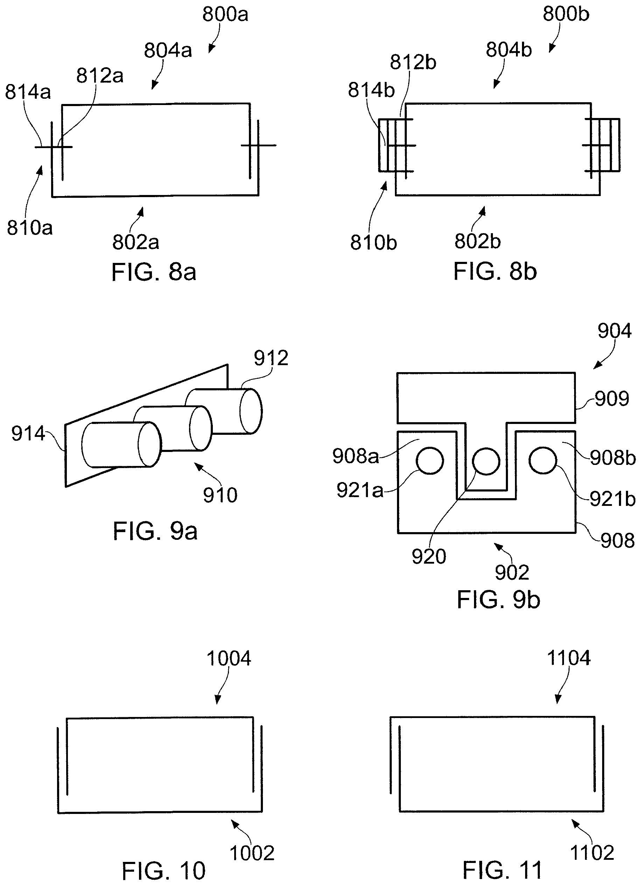

Figures 8a and 8b illustrate fuel cell assemblies 800a, 800b that each comprise a first encapsulation member 802a, 802b and second encapsulation member 804a, 804b. The respective first encapsulation members 802a, 802b each have a first end plate and two side plates that are orthogonal to, and disposed at opposing ends of, the first end plate. The respective second encapsulation members 804a, 804b have a second end plate and two side plates that are orthogonal to, and disposed at opposing ends of, the second end plate.

The fuel cell assembly 800a of figure 8a further comprises two pin locking members 810a that each provide an engagement portion 812a and a handling portion 814a along an axis of the respective pin locking member 810a. The side walls of the first and second encapsulation members 802a, 804a each comprise openings and are arranged such that the locking member 810a can be inserted into the openings engaged with the first and second encapsulation members 802a, 804a. Engagement of the locking member 810a can be achieved by inserting the locking member through the side walls of the first and second encapsulation members 802a, 804a in a direction that is parallel with a plane of fuel cell plates (not shown) within the fuel cell assembly 800a. The insertion direction is also parallel with the end plates of the first and second encapsulation members 802a, 804a. In this case, the direction is also normal to a plane of the side walls of the first and second encapsulation members 802a, 804a.

The fuel cell assembly 800b of figure 8b is similar to that of figure 8a except that the side walls of the first and second encapsulation members 802b, 804b are each configured to receive a locking member 810a with a plurality of engagement portions 812a. The locking member 810b has a handling portion 814a that is coupled to each of the plurality of engagement portions 812a.

The side walls of the first and second encapsulation members 802b, 804b each comprise openings that are arranged in such a way that they can receive the engagement portions 812a of the locking member 810b. The openings in this example are spaced apart along the height of the fuel cell assembly. Such an arrangement can be advantageous in reducing the stress concentration in the side walls of the first and second encapsulation members 802b, 804b.

Figures 9a and 9b illustrate a locking member 910 and a side wall arrangement of a fuel cell stack assembly for receiving the locking member 910.

Figure 9a illustrates a locking member 910 comprising a plurality of engagement portions 912 and a handling portion 914. The engagement portions 912 are provided as pins that extend normal to a plane of the handling portion 914.

Figure 9b illustrates a side view of side walls of a fuel cell stack assembly that is suitable for receiving the locking member 910 of figure 9a. The fuel cell stack assembly comprises a first encapsulation member 902 and a second encapsulation member 904 that are configured to engage with each other in order to apply a compression force to one or more fuel cells located between the two encapsulation members 902, 904.

A side wall 908 of the first encapsulation member 902 and a side wall 909 of the first encapsulation members 904 are shown in figure 9a.

The side wall 908 of the first encapsulation member 902 has at least one, and in this example two, extending members 908a, 908b that extend in a direction that is normal to the plane of the fuel cells. Each extending member 908a, 908b comprises an opening 921a, 921b for receiving one of the engagement portions 912 of the locking member 914. The plurality of extending members 908a, 908b of the respective side wall 908 are spaced apart from one another in a direction that is both parallel with the plane of the fuel cells and parallel with a plane of that side wall 908.

The side wall 909 of the second encapsulation member 904 has at least one extending member. The at least one extending member extends in a direction that is both parallel with the plane of the fuel cells and parallel with the plane of the side wall 909. The at least one extending member is arranged to interleave with the plurality of extending members 908a, 908b of the first encapsulation member 902. The at least one extending member comprises an opening 920 for receiving one of the engagement portions 912 of the locking member 914.

Figure 10 illustrates a fuel cell stack assembly with a first encapsulation member 1002 and a second encapsulation member 1004. Side walls of the second encapsulation member 1004 are provided inside of side walls of the first encapsulation member 1002. That is, the side walls of the of the second encapsulation member 1004 may be adjacent to a fuel cell stack within the enclosure. The side walls of the first encapsulation member 1002 may be adjacent to the side walls of the second encapsulation member 1004.

Figure 11 illustrates an alternative fuel cell stack assembly with a first encapsulation member 1102 and a second encapsulation member 1104. A side wall of the second encapsulation member 1104 may be adjacent to a fuel cell stack within the enclosure. A corresponding side wall of the first encapsulation member 1102 may be adjacent to the side wall of the second encapsulation member 1104. An opposing side wall of the first encapsulation member 1102 may also be adjacent to the fuel cell stack. An opposing side wall of the second encapsulation member 1104 may be adjacent to the side wall of the first encapsulation member 1102.

One or more of the examples disclosed herein can simplify known assembly methods for fuel cell stack assemblies, and can be suitable for mass manufacture. This can reduce assembly costs.

Fuel cell stack assemblies described in this document can be smaller than prior art assemblies, due to the locking members and the way they engage with the encapsulation members.

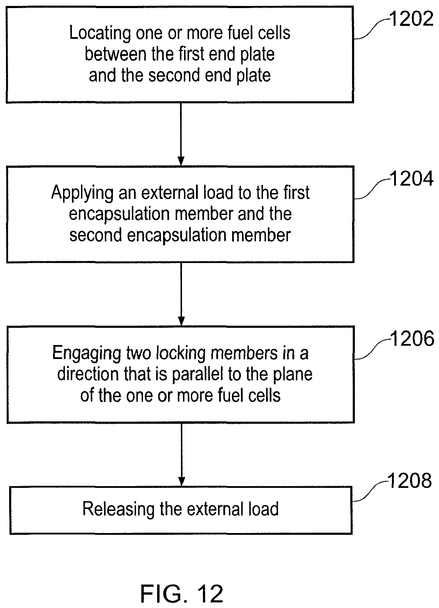

Figure 12 illustrates a method of assembling a fuel cell stack assembly.

The fuel cell stack assembly referred to in relation to figure 12 comprises:
a first encapsulation member comprising a first end plate and two side walls extending transversely from the first end plate;
a second encapsulation member comprising a second end plate;
one or more fuel cells; and
two locking members, each comprising a plurality of engaging regions, wherein the plurality of engaging regions are configured to space apart the respective end plates of the first encapsulation member and the second encapsulation member by different amounts to maintain a predetermined working load on the one or more fuel cells.
The method begins at step 1202 by locating the one or more fuel cells between the first end plate and the second end plate.

At step 1204, the method continues by applying an external load to bias the first end plate of the first encapsulation member and the second end plate of the second encapsulation member towards one another thereby compressing the one or more fuel cells. The one or more fuel cells may be compressed to a desired load.

At step 1206, the method comprises engaging the two locking members with a respective side wall of the first encapsulation member and the second encapsulation member in a direction that is parallel to the plane of the one or more fuel cells.

The fuel cell stack assembly is now assembled, and at step 1208, the method concludes by releasing the external load, thereby providing a fuel cell stack assembly that exerts a compression force on the one or more fuel cells and retaining the first end plate and the second end plate in a fixed relative position.

It will be appreciated that features described in regard to one example may be combined with features described with regard to another example, unless an intention to the contrary is apparent.

## Claims

1. A fuel cell stack assembly (100) comprising:
a first encapsulation member (102) comprising a first end plate (106) and two side walls (108) extending transversely from the first end plate;
a second encapsulation member (104) comprising a second end plate (105);
one or more fuel cells located between the first end plate and second end plate;
and
two locking members (110) that are configured to engage with a respective side wall of the first encapsulation member (102) and the second encapsulation member (104), in order to retain the first end plate (106) and the second end plate (105) in a fixed relative position,
wherein the side walls (108) of the first encapsulation member (102) are each configured to:
engage with the second encapsulation member (104) in order to provide a compression force to the one or more fuel cells, and
receive the respective locking member in a direction that is parallel to the plane of the one or more fuel cells, **characterised in that**, the locking members each comprise a plurality of engaging regions, wherein the plurality of engaging regions are configured to space apart the respective end plates of the first encapsulation member and the second encapsulation member by different amounts to maintain a predetermined working load on the one or more fuel cells.

2. The fuel cell stacks assembly (100) of claim 1, wherein the engaging regions comprise regions of the locking member (110) with different thicknesses.

3. The fuel cell stack assembly (100) of claim 2, wherein the locking member (210) comprises a stepped profile, and the engaging regions comprise different steps in the stepped profile.

4. The fuel cell stack assembly (100) of any preceding claim, wherein the side walls (108) of the first encapsulation member (102) are configured to exert a first force on the respective locking members (110) in an opposite direction to a second force exerted on the respective locking members (110) by the second encapsulation member (104).

5. The fuel cell stack assembly (100) of claim 4, wherein the direction of the first and second forces is transverse to the plane of the one or more fuel cells and wherein optionally the first force is exerted on each locking member (110) at a first position on the locking member, which is different to a second position at which the second force is exerted, wherein the first position is spaced apart from the second position in a direction that is parallel to the plane of the one or more fuel cells.

6. The fuel cell stack assembly (800a) of any proceeding claim, wherein the locking members (810a) each comprise an engagement portion (812a) and a handling portion (814a), and wherein optionally the engagement portion is transverse to the handling portion.

7. The fuel cell stack assembly (100; 700) of any preceding claim, wherein the side walls (108; 708) of the first encapsulation member (102; 702) are configured to receive the locking member (110; 710) in a direction that is orthogonal to the plane of the side walls and wherein optionally the locking members (710) each comprise one or more pins that are configured to engage with one or more openings in the respective side wall (708, 709) of the first encapsulation member (702) and the second encapsulation member (704).

8. The fuel cell stack assembly (600) of claim 7, wherein the locking members (610) each comprise a C-clip.

9. The fuel cell stack assembly (700) of any one of claims 1 to 6, wherein the side walls (708) of the first encapsulation member (702) are configured to receive the locking member (710) in a direction that is parallel to the plane of the side walls.

10. The fuel cell stack assembly (700) of claim 9, wherein the locking members (710) each comprise a pin that is configured to engage with retaining members (721) associated with the respective side wall (708, 709) of the first encapsulation member (702) and the second encapsulation member (704).

11. The fuel cell stack assembly (600) of any preceding claim, wherein the second encapsulation member (604) comprises two side walls (609) extending transversely from the second end plate (605), and the two locking members (610) are configured to engage with a respective side wall of the second encapsulation member, and wherein optionally the side walls of the first encapsulation member are parallel to the side walls of the second encapsulation member.

12. The fuel cell stack assembly (600) of claim 11, wherein one or both of the side walls (609) of the second encapsulation member (604) are within, outside, or co-planar with the side walls (608) of the first encapsulation member (602), and wherein optionally the side walls of the first encapsulation member are parallel to the side walls of the second encapsulation member.

13. The fuel cell stack assembly (100) of any preceding claim, wherein the first end plate (106) and the second end plate (105) each defines a compression surface adjacent to and in compressive relationship with the one or more fuel cells; and
the first end plate and/or the second end plate comprise a preformed element defining the compression surface, the preformed element being configured with a predetermined curvature such that the compression surface is a convex surface when the preformed element is not under load whereas, under the application of the load to maintain the fuel cells under compression, flexure of the preformed element causes the compression surface to become a planar surface.

14. The fuel cell stack assembly (300) of any preceding claim, further comprising a housing (332) that is internally shaped for providing an assembly guide for at least one of: the first encapsulation member (302); the second encapsulation member (304); and the one or more fuel cells.

15. A method of assembling a fuel cell stack assembly, the fuel cell stack assembly comprising:
a first encapsulation member comprising a first end plate and two side walls extending transversely from the first end plate;
a second encapsulation member comprising a second end plate;
one or more fuel cells; and
two locking members, wherein the locking members each comprise a plurality of engaging regions, wherein the plurality of engaging regions are configured to space apart the respective end plates of the first encapsulation member and the second encapsulation member by different amounts,
the method comprising:
locating (1202) the one or more fuel cells between the first end plate and the second end plate;
applying (1204) an external load to bias the first end plate of the first encapsulation member and the second end plate of the second encapsulation member towards one another thereby compressing the one or more fuel cells;
engaging (1206) the two locking members with a respective side wall of the first encapsulation member and the second encapsulation member in a direction that is parallel to the plane of the one or more fuel cells; and
releasing (1208) the external load, thereby providing a fuel cell stack assembly that exerts a compression force on the one or more fuel cells and retaining the first end plate and the second end plate in a fixed relative position to maintain a predetermined working load on the one or more fuel cells.

## Patentansprüche

1. Brennstoffzellenstapelanordnung (100), Folgendes umfassend:
ein erstes Einkapselungselement (102), umfassend eine erste Endplatte (106) und zwei Seitenwände (108), die sich quer von der ersten Endplatte aus erstrecken;
ein zweites Einkapselungselement (104), umfassend eine zweite Endplatte (105);
eine oder mehrere Brennstoffzellen, die sich zwischen der ersten Endplatte und der zweiten Endplatte befinden; und
zwei Verriegelungselemente (110), die konfiguriert sind, in eine jeweilige Seitenwand des ersten Einkapselungselements (102) und des zweiten Einkapselungselements (104) einzugreifen, um die erste Endplatte (106) und die zweite Endplatte (105) in einer festen relativen Position zu halten,
wobei die Seitenwände (108) des ersten Einkapselungselements (102) jeweils konfiguriert sind zum:
Eingreifen in das zweite Einkapselungselement (104), um eine Druckkraft auf die eine oder die mehreren Brennstoffzellen bereitzustellen, und
Empfangen des jeweiligen Verriegelungselements in einer Richtung, die parallel zur Ebene der einen oder der mehreren Brennstoffzellen ist, **dadurch gekennzeichnet, dass** die Verriegelungselemente jeweils mehrere Eingriffsbereiche umfassen, wobei die mehreren Eingriffsbereiche konfiguriert sind, die jeweiligen Endplatten des ersten Einkapselungselements und des zweiten Einkapselungselements um verschiedene Maße voneinander zu beabstanden, um eine vorgegebene Betriebslast auf der einen oder den mehreren Brennstoffzellen aufrechtzuerhalten.

2. Brennstoffzellenstapelanordnung (100) nach Anspruch 1, wobei die Eingriffsbereiche Bereiche des Verriegelungselements (110) mit verschiedenen Dicken umfassen.

3. Brennstoffzellenstapelanordnung (100) nach Anspruch 2, wobei das Verriegelungselement (210) ein abgestuftes Profil umfasst und die Eingriffsbereiche verschiedene Stufen im abgestuften Profil umfassen.

4. Brennstoffzellenstapelanordnung (100) nach einem der vorhergehenden Ansprüche, wobei die Seitenwände (108) des ersten Einkapselungselements (102) konfiguriert sind, eine erste Kraft auf die jeweiligen Verriegelungselemente (110) in einer Richtung, die einer durch das zweite Einkapselungselement (104) auf die jeweiligen Verriegelungselemente (110) ausgeübten zweiten Kraft entgegengesetzt ist, auszuüben.

5. Brennstoffzellenstapelanordnung (100) nach Anspruch 4, wobei die Richtung der ersten und der zweiten Kraft quer zur Ebene der einen oder der mehreren Brennstoffzellen sind und wobei optional die erste Kraft auf jedes Verriegelungselement (110) in einer ersten Position auf das Verriegelungselement ausgeübt wird, die von einer zweiten Position verschieden ist, in der die zweite Kraft ausgeübt wird, wobei die erste Position von der zweiten Position in einer zur Ebene der einen oder der mehreren Brennstoffzellen parallelen Richtung beabstandet ist.

6. Brennstoffzellenstapelanordnung (800a) nach einem der vorhergehenden Ansprüche, wobei die Verriegelungselemente (810a) jeweils einen Eingriffsabschnitt (812a) und einen Handhabungsabschnitt (814a) umfassen, und wobei optional der Eingriffsabschnitt quer zum Handhabungsabschnitt ist.

7. Brennstoffzellenstapelanordnung (100; 700) nach einem der vorhergehenden Ansprüche, wobei die Seitenwände (108; 708) des ersten Einkapselungselements (102; 702) konfiguriert sind, das Verriegelungselement (110; 710) in einer Richtung aufzunehmen, die senkrecht zur Ebene der Seitenwände ist, und wobei optional die Verriegelungselemente (710) jeweils einen oder mehrere Stifte umfassen, die konfiguriert sind, um in eine oder mehrere Ausnehmungen in der jeweiligen Seitenwand (708, 709) des ersten Einkapselungselements (702) und des zweiten Einkapselungselements (704) einzugreifen.

8. Brennstoffzellenstapelanordnung (600) nach Anspruch 7, wobei die Verriegelungselemente (610) jeweils einen Sicherungsring umfassen.

9. Brennstoffzellenstapelanordnung (700) nach einem der Ansprüche 1 bis 6, wobei die Seitenwände (708) des ersten Einkapselungselements (702) konfiguriert sind, das Verriegelungselement (710) in einer Richtung, die parallel zur Ebene der Seitenwände ist, aufzunehmen.

10. Brennstoffzellenstapelanordnung (700) nach Anspruch 9, wobei die Verriegelungselemente (710) jeweils einen Stift umfassen, der konfiguriert ist, in Halteelemente (721), die mit der jeweiligen Seitenwand (708, 709) des ersten Einkapselungselements (702) und des zweiten Einkapselungselements (704) verknüpft sind, einzugreifen.

11. Brennstoffzellenstapelanordnung (600) nach einem der vorhergehenden Ansprüche, wobei das zweite Einkapselungselement (604) zwei Seitenwände (609), die sich quer von der zweiten Endplatte (605) aus erstrecken, umfasst und die zwei Verriegelungselemente (610) konfiguriert sind, in eine jeweilige Seitenwand des zweiten Einkapselungselements einzugreifen, und wobei optional die Seitenwände des ersten Einkapselungselements parallel zu den Seitenwänden des zweiten Einkapselungselements sind.

12. Brennstoffzellenstapelanordnung (600) nach Anspruch 11, wobei eine oder beide der Seitenwände (609) des zweiten Einkapselungselements (604) innerhalb, außerhalb oder koplanar mit den Seitenwänden (608) des ersten Einkapselungselements (602) sind, und wobei optional die Seitenwände des ersten Einkapselungselements parallel zu den Seitenwänden des zweiten Einkapselungselements sind.

13. Brennstoffzellenstapelanordnung (100) nach einem der vorhergehenden Ansprüche, wobei die erste Endplatte (106) und die zweite Endplatte (105) jeweils eine Druckoberfläche neben der einen oder den mehreren Brennstoffzellen und in Druckbeziehung zu diesen definieren; und
die erste Endplatte und/oder die zweite Endplatte ein vorgeformtes Element, das die Druckoberfläche definiert, umfasst, wobei das vorgeformte Element mit einer vorgegebenen Krümmung konfiguriert ist, sodass die Druckoberfläche eine konvexe Oberfläche ist, wenn das vorgeformte Element nicht unter Last steht, wohingegen Biegen des vorgeformten Elements unter Anwendung der Last zum Aufrechterhalten der Brennstoffzellen unter Druck bewirkt, dass die Druckoberfläche eine planare Oberfläche wird.

14. Brennstoffzellenstapelanordnung (300) nach einem der vorhergehenden Ansprüche, ferner umfassend ein Gehäuse (332), das intern geformt ist, um eine Anordnungsführung für wenigstens eines der Folgenden bereitzustellen: das erste Einkapselungselement (302); das zweite Einkapselungselement (304); und die eine oder die mehreren Brennstoffzellen.

15. Verfahren zum Anordnen einer Brennstoffzellenstapelanordnung, wobei die Brennstoffzellenstapelanordnung Folgendes umfasst:
ein erstes Einkapselungselement, umfassend eine erste Endplatte und zwei Seitenwände, die sich in Querrichtung von der ersten Endplatte aus erstrecken;
ein zweites Einkapselungselement, umfassend eine zweite Endplatte;
eine oder mehrere Brennstoffzellen; und
zwei Verriegelungselemente, wobei die Verriegelungselemente jeweils mehrere Eingriffsbereiche umfassen, wobei die mehreren Eingriffsbereiche konfiguriert sind, die jeweiligen Endplatten des ersten Einkapselungselements und des zweiten Einkapselungselements um verschiedene Maße voneinander zu beabstanden,
wobei das Verfahren Folgendes umfasst:
Positionieren (1202) der einen oder der mehreren Brennstoffzellen zwischen der ersten Endplatte und der zweiten Endplatte;
Anwenden (1204) einer externen Last zum Vorspannen der ersten Endplatte des ersten Einkapselungselements und der zweiten Endplatte des zweiten Einkapselungselements zueinander, wodurch die eine oder die mehreren Brennstoffzellen zusammengedrückt werden;
Ineingriffbringen (1206) der zwei Verriegelungselemente mit einer jeweiligen Seitenwand des ersten Einkapselungselements und des zweiten Einkapselungselements in einer Richtung, die parallel zur Ebene der einen oder der mehreren Brennstoffzellen ist; und
Freigeben (1208) der externen Last, dadurch Bereitstellen einer Brennstoffzellenstapelanordnung, die eine Druckkraft auf die eine oder die mehreren Brennstoffzellen ausübt, und Halten der ersten Endplatte und der zweiten Endplatte in einer festen relativen Position, um eine vorgegebene Betriebslast auf der einen oder den mehreren Brennstoffzellen aufrechtzuerhalten.

## Revendications

1. Ensemble empilement de piles à combustible (100) comprenant :
un premier organe d'encapsulation (102) comprenant une première plaque d'extrémité (106) et deux parois latérales (108) s'étendant transversalement depuis la première plaque d'extrémité ;
un second organe d'encapsulation (104) comprenant une seconde plaque d'extrémité (105) ;
une ou plusieurs piles à combustible situées entre la première plaque d'extrémité et la seconde plaque d'extrémité ; et
deux organes de verrouillage (110) qui sont configurés pour s'enclencher avec une paroi latérale respective du premier organe d'encapsulation (102) et du second organe d'encapsulation (104), afin de retenir la première plaque d'extrémité (106) et la seconde plaque d'extrémité (105) dans une position relative fixe,
dans lequel les parois latérales (108) du premier organe d'encapsulation (102) sont chacune configurées pour :
s'enclencher avec le second organe d'encapsulation (104) afin de fournir une force de compression aux une ou plusieurs piles à combustible, et
recevoir l'organe de verrouillage respectif dans une direction qui est parallèle au plan des une ou plusieurs piles à combustible, **caractérisé en ce que**, les organes de verrouillage comprennent chacun une pluralité de régions d'enclenchement, dans lequel la pluralité de régions d'enclenchement est configurée pour espacer les plaques d'extrémité respectives du premier organe d'encapsulation et du second organe d'encapsulation de quantités différentes pour maintenir une charge de travail prédéterminée sur les une ou plusieurs piles à combustible.

2. Ensemble empilement de piles à combustible (100) selon la revendication 1, dans lequel les régions d'enclenchement comprennent des régions de l'organe de verrouillage (110) avec des épaisseurs différentes.

3. Ensemble empilement de piles à combustible (100) selon la revendication 2, dans lequel l'organe de verrouillage (210) comprend un profil étagé, et les régions d'enclenchement comprennent des étages différents dans le profil étagé.

4. Ensemble empilement de piles à combustible (100) selon l'une quelconque des revendications précédentes, dans lequel les parois latérales (108) du premier organe d'encapsulation (102) sont configurées pour exercer une première force sur les organes de verrouillage (110) respectifs dans une direction opposée à une seconde force exercée sur les organes de verrouillage (110) respectifs par le second organe d'encapsulation (104).

5. Ensemble empilement de piles à combustible (100) selon la revendication 4, dans lequel la direction des première et seconde forces est transversale au plan des une ou plusieurs piles à combustible et dans lequel facultativement la première force est exercée sur chaque organe de verrouillage (110) à une première position sur l'organe de verrouillage, qui est différente d'une seconde position à laquelle la seconde force est exercée, dans lequel la première position est espacée de la seconde position dans une direction qui est parallèle au plan des une ou plusieurs piles à combustible.

6. Ensemble empilement de piles à combustible (800a) selon l'une quelconque des revendications précédentes, dans lequel les organes de verrouillage (810a) comprennent chacun une portion d'enclenchement (812a) et une portion de manipulation (814a), et dans lequel facultativement la portion d'enclenchement est transversale à la portion de manipulation.

7. Ensemble empilement de piles à combustible (100 ; 700) selon l'une quelconque des revendications précédentes, dans lequel les parois latérales (108 ; 708) du premier organe d'encapsulation (102 ; 702) sont configurées pour recevoir l'organe de verrouillage (110 ; 710) dans une direction qui est orthogonale au plan des parois latérales et dans lequel facultativement les organes de verrouillage (710) comprennent chacun un ou plusieurs pions qui sont configurés pour s'enclencher avec une ou plusieurs ouvertures dans la paroi latérale (708, 709) respective du premier organe d'encapsulation (702) et du second organe d'encapsulation (704).

8. Ensemble empilement de piles à combustible (600) selon la revendication 7, dans lequel les organes de verrouillage (610) comprennent chacun un anneau de retenue.

9. Ensemble empilement de piles à combustible (700) selon l'une quelconque des revendications 1 à 6, dans lequel les parois latérales (708) du premier organe d'encapsulation (702) sont configurées pour recevoir l'organe de verrouillage (710) dans une direction qui est parallèle au plan des parois latérales.

10. Ensemble empilement de piles à combustible (700) selon la revendication 9, dans lequel les organes de verrouillage (710) comprennent chacun un pion qui est configuré pour s'engager avec des organes de retenue (721) associés à la paroi latérale (708, 709) respective du premier organe d'encapsulation (702) et du second organe d'encapsulation (704).

11. Ensemble empilement de piles à combustible (600) selon l'une quelconque des revendications précédentes, dans lequel le second organe d'encapsulation (604) comprend deux parois latérales (609) s'étendant transversalement depuis la seconde plaque d'extrémité (605), et les deux organes de verrouillage (610) sont configurés pour s'enclencher avec une paroi latérale respective du second organe d'encapsulation, et dans lequel facultativement les parois latérales du premier organe d'encapsulation sont parallèles aux parois latérales du second organe d'encapsulation.

12. Ensemble empilement de piles à combustible (600) selon la revendication 11, dans lequel une des parois latérales (609) ou les deux du second organe d'encapsulation (604) sont à l'intérieur, à l'extérieur, ou coplanaires avec les parois latérales (608) du premier organe d'encapsulation (602), et dans lequel facultativement les parois latérales du premier organe d'encapsulation sont parallèles aux parois latérales du second organe d'encapsulation.

13. Ensemble empilement de piles à combustible (100) selon l'une quelconque des revendications précédentes, dans lequel la première plaque d'extrémité (106) et la seconde plaque d'extrémité (105) définissent chacune une surface de compression adjacente à et en relation de compression avec les une ou plusieurs piles à combustible ; et
la première plaque d'extrémité et/ou la seconde plaque d'extrémité comprennent un élément préformé définissant la surface de compression, l'élément préformé étant configuré avec une courbure prédéterminée de sorte que la surface de compression soit une surface convexe lorsque l'élément préformé n'est pas sous charge tandis que, sous l'application de la charge pour maintenir les piles à combustible sous compression, une flexion de l'élément préformé amène la surface de compression à devenir une surface plane.

14. Ensemble empilement de piles à combustible (300) selon l'une quelconque des revendications précédentes, comprenant un boîtier (332) qui est conformé à l'intérieur pour fournir un guide d'ensemble pour au moins l'un parmi : le premier organe d'encapsulation (302) ; le second organe d'encapsulation (304) ; et les une ou plusieurs piles à combustible.

15. Procédé d'assemblage d'un ensemble empilement de piles à combustible, l'ensemble empilement de piles à combustible comprenant :
un premier organe d'encapsulation comprenant une première plaque d'extrémité et deux parois latérales s'étendant transversalement depuis la première plaque d'extrémité ;
un second organe d'encapsulation comprenant une seconde plaque d'extrémité ;
une ou plusieurs piles à combustible ; et
deux organes de verrouillage, dans lequel les organes de verrouillage comprennent chacun une pluralité de régions d'enclenchement, dans lequel la pluralité de régions d'enclenchement est configurée pour espacer les plaques d'extrémité respectives du premier organe d'encapsulation et du second organe d'encapsulation de quantités différentes,
le procédé comprenant :
la localisation (1202) des une ou plusieurs piles à combustible entre la première plaque d'extrémité et la seconde plaque d'extrémité ;
l'application (1204) d'une charge externe pour solliciter la première plaque d'extrémité du premier organe d'encapsulation et la seconde plaque d'extrémité du second organe d'encapsulation l'une vers l'autre compressant ainsi les une ou plusieurs piles à combustible ;
l'enclenchement (1206) des deux organes de verrouillage avec une paroi latérale respective du premier organe d'encapsulation et du second organe d'encapsulation dans une direction qui est parallèle au plan des une ou plusieurs piles à combustible ; et
le relâchement (1208) de la charge externe, fournissant ainsi un ensemble empilement de piles à combustible qui exerce une force de compression sur les une ou plusieurs piles à combustible et la retenue de la première plaque d'extrémité et de la seconde plaque d'extrémité dans une position relative fixe pour maintenir une charge de travail prédéterminée sur les une ou plusieurs piles à combustible.
